# EUROPÄISCHE PATENTANMELDUNG

(11) **EP 1 792 764 A2**
(43) Veröffentlichungstag der Anmeldung: **06.06.2007**
(21) Anmeldenummer: 06023976.1
(22) Anmeldetag: 18.11.2006
(51) Int. Cl.: B60J 7/00, B60J 7/04, B60J 7/14

(54) **Rahmen für ein Aufbauelement**

(30) Priorität: 30.11.2005 DE 102005057011
(71) Anmelder: Magna Car Top Systems GmbH, 74321 Bietigheim-Bissingen (DE)
(72) Erfinder: Käsweber, Hubert, D-71636 Ludwigsburg (DE); Kirtzakis, Stylianos, 70374 Stuttgart (DE)

(57) **Zusammenfassung**

Rahmen ist ein Aufbauelement (2), vorzugsweise schwenkbares Dachelement (3) eines bewegliches Dach eines Personenkraftwagens (1), welcher Rahmen (7) aus wenigstens zwei einen Hohlträger (8) bildenden ersten (9) und zweiten (10) Profilelementen gebildet wird, die an mit Abstand zueinander angeordneten ersten und zweiten Profilverbindungen (11,12) durch Schweißen miteinander verbunden sind.

Zur Erhöhung der Festigkeit und fertigungstechnischen Optimierung des Rahmens (7) umfasst zumindest eine der beiden Profilverbindungen (11,12) der Profilelemente einen ebenen Verbindungsabschnitt (13,14) und einen profilierten Verbindungsabschnitt (15,16), zwischen denen wenigstens ein Freigang (18,19) vorgesehen ist, wobei der profilierte Verbindungsabschnitt mit einem Verbindungsbereich (17,21) an den ebenen Verbindungsabschnitt herangeführt ist und dass der Verbindungsbereich des profilierten Verbindungsabschnitts und der ebene Verbindungsabschnitt durch Laserschweißnähte (20) festgesetzt sind.

## Beschreibung

Die Erfindung bezieht sich auf einen Rahmen für ein Aufbauelement, vorzugsweise schwenkbares Dachelement für ein bewegliches Dach eines Personenkraftwagen.

Es ist ein Rahmen für einen als bewegliches Aufbauelement ausgebildeten Heckdeckel bekannt - DE 34 26 287 A1 -, der ein Profilelement und eine Außenhautwand aufweist. Das Profilelement und die Außenhautwand sind in einem Randbereich des Rahmens unter Bildung eines Halteflansches miteinander verbunden. Der Flanschvorrichtung wird durch einen Stützflansch des Profilelements und einen Bördelflansch der Außenhautwand gebildet.

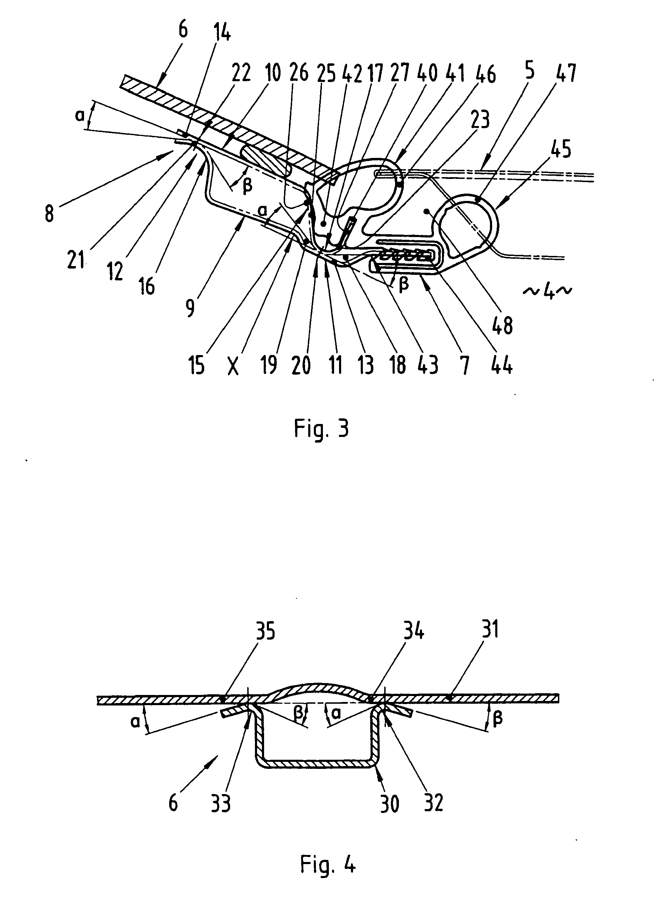

In der DE 103 57 370 A1 wird eine Heckscheibe für ein Kraftfahrzeug behandelt, die unter Vermittlung eines Klebekörpers mit einem Rahmen verbunden ist. Der Rahmen wird durch ein Innenteil und ein Außenteil gebildet, die an zwei Verbindungsbereichen zusammengeführt sind -Fig. 3-. Der den Rahmen begrenzende äußere Verbindungsbereich umfasst zwei zusammengesetzte Flansche, die gemäß bildlicher Darstellung durch Punktschweißen festgesetzt sind.

Es ist Aufgabe der Erfindung einen Rahmen für ein schwenkbares Aufbauelement für ein Kraftfahrzeug zu schaffen, der bei einfacher Herstellung eine hohe Festigkeit aufweist.

Nach der Erfindung wird diese Aufgabe durch die Merkmale des Patentanspruchs 1 gelöst. Weitere, die Erfindung ausgestaltende Merkmale sind in den Unteransprüchen enthalten.

Die mit der Erfindung hauptsächlich erzielten Vorteile sind darin zu sehen, dass die den Hohlträger bildenden Profilelemente und ihre Profilverbindungen aufwandsarm herstellbar sind. Dabei stellen der ebene Verbindungsabschnitt und der profilierte Verbindungsabschnitt leicht umsetzbare Konstruktionselemente dar, die sich funktionsgerecht zusammensetzen lassen und aufgrund eines Verbindungsbereichs des profilierten Verbindungsabschnitt sowie durch Laserschweißen eine ausgezeichnete Rahmenverbindung eingehen. Der gezielte Freigang zwischen dem ebenen Profilabschnitt und dem profilierten Profilanschnitt gewährleistet, dass beim Laserschweißvorgang eine gezielte Abfuhr der dabei entstehenden Gase erfolgt. Falls der Rahmen, z.B. eine Glasscheibe tragend, umlaufend ausgeführt ist, wird dank der Profilelemente, der Profilverbindungen und der Laserschweißung erreicht, dass der Rahmen auch nach dem Laserschweißen seine Konstruktionslage beibehält und nicht wie bei anderen Schweißverbindungen -Punktscheißen von Flanschen- eine verschränkte Lage einnimmt, die durch Bauteiltoleranzen und Wärmespannungen bzw. Wärmeverzug hervorgerufen werden.

In der Zeichnung werden Ausführungsbeispiele der Erfindung gezeigt, die nachstehend näher beschrieben werden.

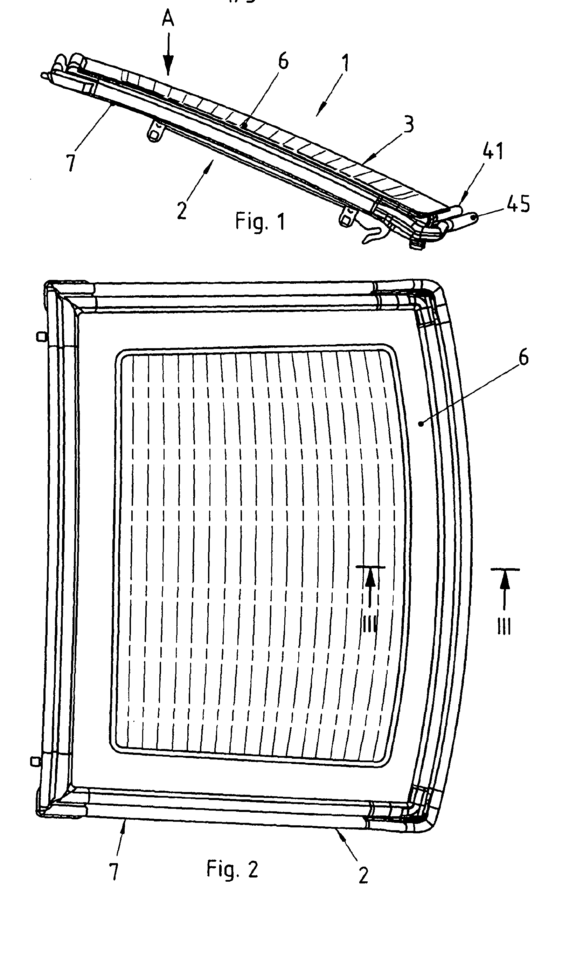

Es zeigen
Fig. 1 eine Seitenansicht eines Rahmens eines Aufbauelements nach der Erfindung,
Fig. 2 eine Ansicht in Pfeilrichtung A der Fig. 1,
Fig. 3 einen Schnitt nach der Linie III-III der Fig. 2 in größerem Maßstab,
Fig. 4 einen Schnitt durch den Rahmen nach Fig. 2 mit einer anderen Ausführungsform,
Fig. 5 eine Einzelheit X der Fig. 3 in schematischer Darstellung,
Fig. 6 eine Ansicht entsprechend Fig. 5.
Fig. 7 eine Ansicht in Pfeilrichtung B der Fig. 5

Von einem nicht näher dargestellten Personenkraftwagen 1 ist lediglich ein Aufbauelement 2 abgebildet, das Bestandteil eines absenkbaren und zusammenlegbaren mehrteiligen Dachs ist. Das Dach umfasst ein das Aufbauelement 2 bildendes schwenkbare Dachelement 3, das zusammen mit dem Dach in einem Aufbewahrungsraum 4 -Fig. 3- des Personenkraftwagens 1 unterbringbar ist. Der Aufbewahrungsraum 4 liegt benachbart einem Kofferraum bzw. bildet eine Einheit mit letzterem -nicht gezeigt- wobei beide Räume mittels eines Heckdeckels 5 verschließbar sind.

Das Dachelement 3 umfasst einen eine Glasscheibe 6 tragenden Rahmen 7, der aus wenigstens zwei einen Hohlträger 8 -bspw. mit rechteckigem Querschnitt- bildenden ersten und zweiten Profilelementen 9 bzw. 10 besteht. Das erste Profilelement 9 und das zweite Profilelement 10 sind an mit Abstand zueinander angeordneten ersten und zweiten Profilverbindungen 11 und 12 miteinander durch Fügen, vorzugsweise Schweißen, verbunden. Beide Profilverbindungen 11 und 12 besitzen ebene Verbindungsabschnitte 13 und 14 sowie profilierte Verbindungsabschnitte 15 und 16. Der profilierte Verbindungsabschnitt 15 ist mit einem Verbindungsbereich 17 an den ebenen Verbindungsabschnitt 13 herangeführt, wobei beiderseits des Verbindungsbereichs 17 zwischen dem ebenen Verbindungsabschnitt 13 und dem profilierten Verbindungsabschnitt 15 Freigänge 18 und 19 vorgesehen sind; die Freigänge 18 und 19 schließen spitze Winke α und β ein. Der ebene Verbindungsabschnitt 13 und der profilierte Verbindungsabschnitt 15 sind im Verbindungsbereich 17 durch eine Laserschweißnaht 20 festgesetzt. Die beim Laserschweißen entstehenden Gase entweichen über die Freigänge 18 und 19. Der profiliere Verbindungsabschnitt 16 und der ebene Verbindungsabschnitt 14 sind unter Vermittlung eines Verbindungsbereichs 21 wie vorstehend ausgeführt zusammengesetzt, und zwar durch eine Laserschweißnaht 22.

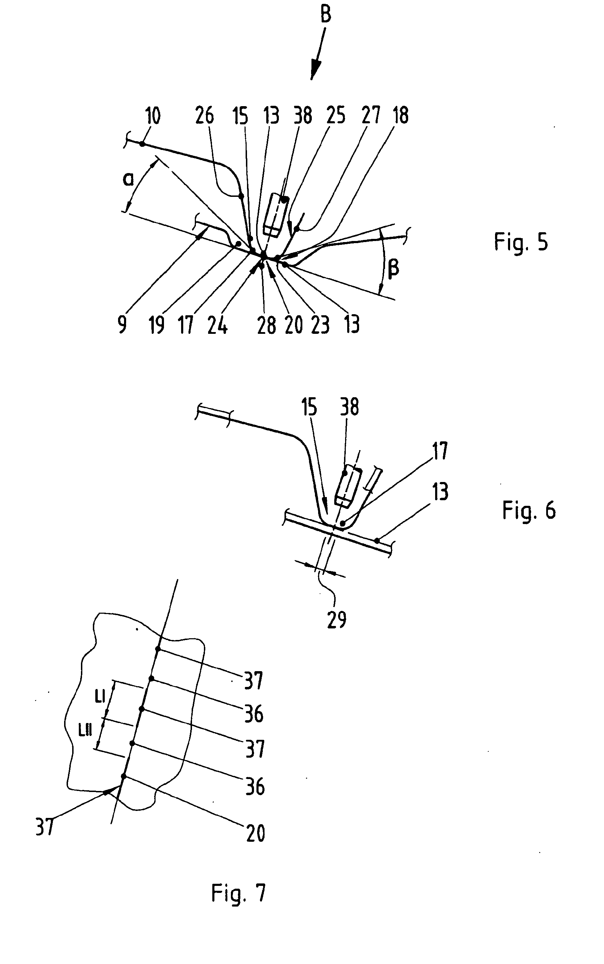

Jeder profilierte Verbindungsabschnitt z.B. 15 weist einen Bogen 23 auf, an dessen Spitze 24 der Verbindungsbereich 17 vorgesehen ist. Der Bogen 23 ist in etwa Teil eines U-förmigen Querschnitts 25 mit Schenkeln 26 und 27 -Fig. 5-, wovon der Schenkel 27 frei steht. Denkbar ist auch den profilierten Verbindungsabschnitt 15 als V-förmigen Querschnitt auszuführen, an dessen Spitze dann der entsprechende Verbindungsbereich vorgesehen werden kann. In einem Ausführungsbeispiel sind der Verbindungsbereich 17 und der ebene Verbindungsabschnitt 13 durch einen Linienberührungsabschnitt 28 -Fig. 5- zusammengeführt. Es ist aber auch möglich den Verbindungsbereich 17 und den ebene Verbindungsabschnitt 13 durch einen Flächenberührungsabschnitt 29 in Kontakt zu bringen -Fig. 6-.

In Fig. 3 weist jedes Profilelement 9 und 10 einen ebenen Verbindungsabschnitt 13 oder 14 sowie einen profilierten Verbindungsabschnitt 15 oder 16 auf. Dagegen ist in Fig. 4 der Rahmen 6 mit einem ersten Profilelement 30 und einem zweiten Profilelement 31 versehen, die in der Weise gestaltet sind, dass das erste Profilelement 30 zwei profilierte Verbindungsabschnitte 32 und 33 und das zweite Profilelement 31 zwei ebene Verbindungsabschnitte 34 und 35 aufweist.

Gemäß Fig. 7 ist die Laserschweißnaht 20 entlang der Profilverbindungen 11 und 12 mit Unterbrechungen 36 versehen. Dabei können Laserschweißnahtabschnitte 37 und die Unterbrechungen 36 in etwa gleich lang sein. Je nach konstruktiven Anforderungen besteht aber auch die Möglichkeit, dass die Laserschweißabschnitte 37 und die Unterbrechungen 36 unterschiedliche Längen LI und LII aufweisen. Zur Erstellung der Laserschweißnaht 20 bzw. der Laserschweißabschnitte 37 wird eine Gaszuführungsdüse 38 von Innenseiten Is der profilierten Verbindungsabschnitten 15 und 16 aus an das zu verbindende Schweißgut -Fig. 5 und 6- herangeführt.

Der profilierte Verbindungsabschnitt 15 ist einem Heckdeckel 5 zugekehrt -Fig. 3-, und der frei stehende Schenkel 27 des U-förmigen Querschnitts 25 ist als erster Tragflansch 40 für einen ersten Dichtkörper 41 ausgestaltet. Dabei ragt der mit dem Heckdeckel 39 zusammenarbeitende Dichtkörper 41 mit einem Lagerkörper 42 in den U-förmigen Querschnitt 25 hinein. Außerdem ist an dem ebenen Verbindungsabschnitt 13 ein als Abwinkelung 43 dargestellter zweiter Tragflansch 44 angebracht, der einen zweiten Dichtkörper 45 aufnimmt, der sich ebenfalls am Heckdeckel 5 abstützt. Die Dichtkörper 41 und 45 sind aus einem Stück hergestellt, und zwar dergestalt, dass zwischen Dichtkörperbereichen 46 und 47 ein Wasserführungskanal 48 verläuft.

## Patentansprüche

1. Rahmen für ein Aufbauelement, vorzugsweise schwenkbares Dachelement für ein bewegliches Dach eines Personenkraftwagens, welcher Rahmen aus wenigstens zwei einen Hohlträger bildenden ersten und zweiten Profilelementen gebildet wird, die an mit Abstand zueinander angeordneten ersten und zweiten Profilverbindungen durch Schweißen miteinander verbunden sind, **dadurch gekennzeichnet, dass** zumindest eine der beiden Profilverbindungen (11 oder 12) der Profilelemente (9 und 10) einen ebenen Verbindungsabschnitt (13 oder 14) und einen profilierten Verbindungsabschnitt (15 oder 16) umfasst , zwischen denen wenigstens ein Freigang (18 und 19) vorgesehen ist, wobei der profilierte Verbindungsabschnitt (15 oder 16) mit einem Verbindungsbereich (17;21)) an den ebenen Verbindungsabschnitt (13 oder 14) herangeführt ist und dass der Verbindungsbereich (17; 21) des profilierten Verbindungsabschnitts (13 oder 14) und der ebene Verbindungsabschnitt (13 oder 14) durch eine oder mehrere Laserschweißnähte (20) festgesetzt sind.

2. Rahmen nach Anspruch 1, **dadurch gekennzeichnet, dass** der profilierte Verbindungsabschnitt (15 oder 16) einen Bogen (23) aufweist, an dessen Spitze (24) in etwa der Verbindungsbereich (17; 21) vorgesehen ist.

3. Rahmen nach Anspruch 1, **dadurch gekennzeichnet, dass** der profilierte Verbindungsabschnitt (15 oder 16) im Querschnitt V-förmig ausgebildet ist, an dessen Spitze in etwa der Verbindungsbereich vorgesehen ist.

4. Rahmen nach den Ansprüchen 1 bis 3, **dadurch gekennzeichnet, dass** der Verbindungsbereich (17) und der ebene Verbindungsabschnitt (13 oder 14) über einen Linienberührungsabschnitt (28) zusammengeführt sind.

5. Rahmen nach den Ansprüchen 1 bis 3, **dadurch gekennzeichnet, dass** der Verbindungsbereich (17) und der ebene Verbindungsabschnitt (13) über einen Flächenberührungsanschnitt (29) zusammengeführt sind.

6. Rahmen nach den Ansprüchen 1 bis 3, **dadurch gekennzeichnet, dass** zu beiden Seiten des Verbindungsbereichs (17) Winkel (α und β) einschließende Freigänge (18 und 19) ausgebildet sind.

7. Rahmen nach Anspruch nach Anspruch 1, **dadurch gekennzeichnet, dass** jedes Profilelement (9 und 10) einen ebenen Verbindungsabschnitt (13 oder 14) und einen profilierten Verbindungsabschnitt (15 oder 16) aufweist.

8. Rahmen nach Anspruch 1, **dadurch gekennzeichnet, dass** das eine Profilelement (30) zwei profilierte Verbindungsabschnitte (32 und 33) und das andere Profilelement (31) die entsprechenden ebenen Verbindungsabschnitte (34 und 35) aufweist.

9. Rahmen nach Anspruch 1, **dadurch gekennzeichnet, dass** die Laserschweißnaht (20) entlang der Profilverbindungen (11 oder 12) mit Unterbrechungen (36) versehen ist.

10. Rahmen nach Anspruch 9, **dadurch gekennzeichnet, dass** Laserschweißabschnitte (37) der Laserschweißnaht (20) und die Unterbrechungen (36) in etwa gleich lang sind.

11. Rahmen nach Anspruch 9, **dadurch gekennzeichnet, dass** die Laserschweißnaht (20) und die Unterbrechungen (36) unterschiedliche Länge (LI; LII) aufweisen.

12. Rahmen nach Anspruch 1, **dadurch gekennzeichnet, dass** der profilierte Verbindungsabschnitt (15 oder 16) einen U-förmigen Querschnitt (25) mit einem freien als erster Tragflansch (40) ausgebildeten Schenkel (27) aufweist, der einen ersten Dichtkörper (41) für einen Heckdeckel (39) trägt.

13. Rahmen nach Anspruch 1, **dadurch gekennzeichnet, dass** der Dichtkörper (41) mit einem Lagerkörper (42) in den U-förmigen Querschnitt (25) hineinragt.

14. Rahmen nach den Ansprüchen 1 und 13, **dadurch gekennzeichnet, dass** von dem ebenen Verbindungsabschnitt (14) ein als Abwinkelung (43) ausgeführter zweiter Tragflansch (44) weggeführt ist, der einen zweiten Dichtkörper (43) für den Heckdeckel (39) trägt.

15. Rahmen nach Anspruch 14, **dadurch gekennzeichnet, dass** der erste Dichtkörper (41) und der zweite Dichtkörper (45) aus einem Stück hergestellt sind.

16. Rahmen nach Anspruch 15, **dadurch gekennzeichnet, dass** zwischen Dichtkörperbereichen (46 und 47) des ersten und des zweiten Dichtkörpers (41 und 45) ein Wasserführungskanal (48) verläuft.
